# EUROPEAN PATENT SPECIFICATION

(11) **EP 1 003 069 B1**
(45) Date of publication and mention of the grant of the patent: **28.01.2004**
(21) Application number: 99122687.9
(22) Date of filing: 15.11.1999
(51) Int. Cl.: G03B 17/00, H04N 5/232

(54) **Camera with means for recognizing specific physical features of a user**
Kamera mit Mitteln zur Erkennung von spezifischen physischen Merkmalen eines Benutzers
Appareil de prise de vues avec dispositif pour la reconnaissance de caractéristiques physiques spécifiques à un utilisateur

(30) Priority: 16.11.1998 JP 32527398
(43) Date of publication of application: 24.05.2000
(73) Proprietor: OLYMPUS OPTICAL CO., LTD., Tokyo (JP)
(72) Inventor: Kubota, Akihiro, c/o Olympus Optical Co.,Ltd., Hachioji-shi, Tokyo (JP); Kitahara, Toshihiro, c/o Olympus Optical Co,.Ltd., Hachioji-shi, Tokyo (JP); Hashi, Hiroshi, c/o Olympus Optical Co.,Ltd., Hachioji-shi, Tokyo (JP); Sawaki, Ryoichi, c/o Olympus Optical Co.,Ltd., Hachioji-shi, Tokyo (JP); Ito, Hiroshi, c/o Olympus Optical Co.,Ltd., Hachioji-shi, Tokyo (JP); Hidaka, Toru, c/o Olympus Optical Co.,Ltd., Hachioji-shi, Tokyo (JP)
(74) Representative: Kuhnen & Wacker

(56) References cited:
- EP-A- 0 407 861
- EP-A- 0 872 814
- WO-A-97/06640
- WO-A-98/11750
- DE-U- 9 304 488
- US-A- 5 715 487
- PATENT ABSTRACTS OF JAPAN vol. 012, no. 163 (P-703), 18 May 1988 (1988-05-18) -& JP 62 276530 A (CASIO COMPUT CO LTD), 1 December 1987 (1987-12-01)
- PATENT ABSTRACTS OF JAPAN vol. 1998, no. 02, 30 January 1998 (1998-01-30) -& JP 09 284691 A (SONY CORP), 31 October 1997 (1997-10-31)

## Description

The present invention relates to a camera.

Various methods have been proposed for specifying a user of a camera. For example, Japanese Patent Application KOKAI Publication No. 5-127246 discloses that a copyright mark, a user name, or the like is recorded together with an image only when a user is identified as the person who has actually registered the copyright mark by detecting physical characteristics, finger prints, and voices of the user.

In addition, Japanese Patent Application KOKAI Publication No. 9-153016 discloses a personal identification system using a wireless IC card which enables use of a personal computer only in the case where ID information stored in the wireless IC card corresponds to ID information previously stored in the personal computer.

However, in the method described in the above Publication No. 5-127246, the camera can be freely used by any other person than the registered person, and therefore, even another person can record a copyright mark by reproducing a recorded voice if a recorded voice of the registered person is available.

In addition, in the method described in the above Publication No. 9-153016, use of a personal computer is permitted if another person gets an IC card.

Therefore, the present invention has an object of providing cameras every of which is capable of specifying a person who is allowed to use the camera so that only the user who has a permitted ID can use the camera and owners of images can be securely grasped.

To achieve the above object, a camera according to the present invention comprises: an ID information storage section for previously storing ID information of a user who is allowed to use the camera; an ID information read section for reading ID information of a user at the time of use; an ID information collation section for comparing and collating the ID information read by the ID information read section with the ID information previously stored in the ID information storage section; and a use limit section for allowing use of the camera only when a collation result from the ID information collation section indicates correspondence of the ID information.

This summary of the invention does not necessarily describe all necessary features so that the invention may also be a sub-combination of these described features.

The invention can be more fully under stood from the following detailed description when taken in conjunction with the accompanying drawings, in which:
FIG. 1A is a cross-sectional view showing a digital camera of single-lens reflex type.
FIG. 1B is a view concerning the internal structure of the camera, showing the state of the mirror 2 during retina collation.
FIG. 2 is a view concerning the internal structure of the camera, showing the state of the mirror 2 during photographing.
FIG. 3 is a view concerning the internal structure of the camera, showing the state of the mirror 2 when an image is picked up.
FIGS. 4A and 4B are views for explaining the second embodiment of the present invention.
FIGS. 5A and 5B are views for explaining the third embodiment of the present invention.
FIGS. 6A and 6B are views for explaining the fourth embodiment of the present invention.

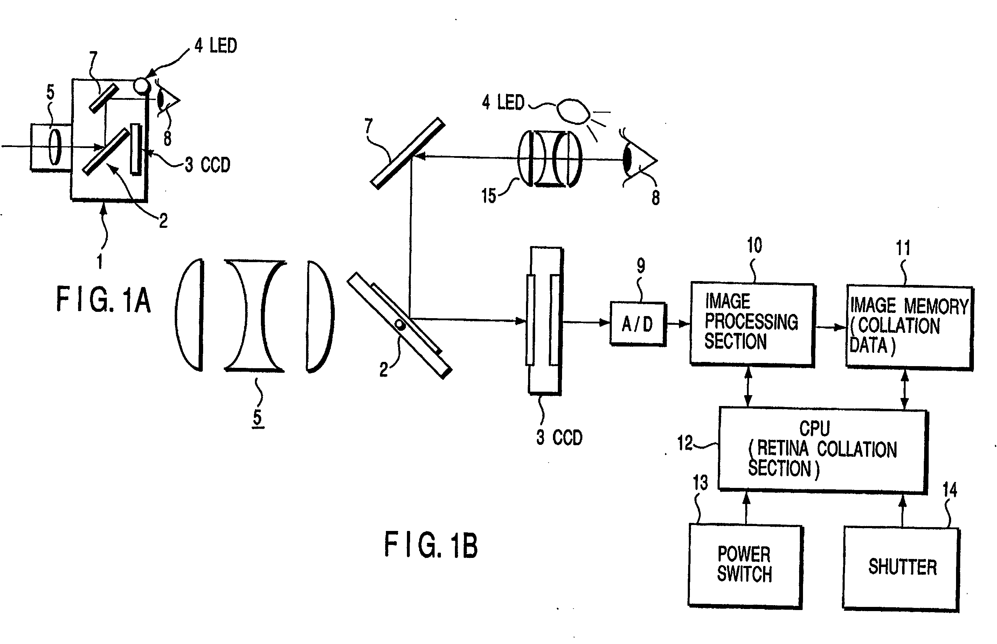

In the following, embodiments of the present invention will be specifically explained with reference to the drawings. At first, the first embodiment of the invention will be explained. FIG. 1A is a cross-sectional view of a single-lens reflex type digital camera (which will be hereinafter called simply a camera) to which the present invention is applied. This camera is provided with a lens 5, mirrors 2 and 7, a CCD 3, an LED 4, and the like. FIG. 1B shows the internal structure of the camera 1. In addition to the elements shown in FIG. 1A, a finder optical system 15, an A/D converter 9, an image processing section 10, an image memory 11 as an ID information storage section, a CPU (or retina collation section) 12, a power source switch 13, and a shutter 14. An area for registering a user is provided at a part of the image memory 11 or CPU 12. The CPU 12 has an ID information collation function and a use limitation function.

In addition, the mirror 2 has a function as an optical axis switching section, and the position is switched between the case of photographing an object and the case of obtaining retina data from a user. The CCD 3 is used in common to both cases.

The first embodiment is arranged such that data concerning the iris or retina of a person is obtained and only the person who is allowed to use the camera can use a camera.

At first, a retina collation is carried out to determine whether photographing with use of the camera 1 should be allowed or not. In the following, the procedure of the retina collation will be explained with reference to FIG. 1B. When the power switch is turned on and a user looks into the finder optical system 15, light from the LED 4 is irradiated onto an eye point 8 of the user. Reflection light therefrom is let enter as retina data through the finder optical system 15 and is irradiated onto an image receiving surface of the CCD 3 through the mirrors 7 and 2. The retina data is converted into an electric signal by the CCD 3 and is further converted into a digital signal by an A/D converter section 9. The signal is subjected to predetermined image processing by the image processing section 10, and is thereafter supplied to the CPU 12 as a retina collation section. The CPU 12 performs a comparative collation with use of collation data previously stored in the image memory 11. If both the retina data and the collation data are determined to be equal to each other as a result of the collation, operation of the camera is permitted.

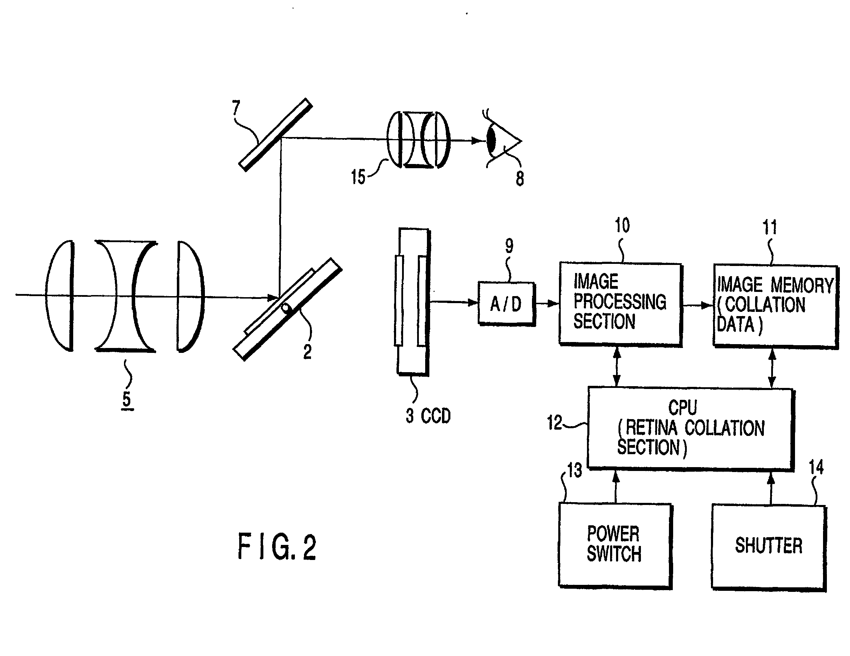

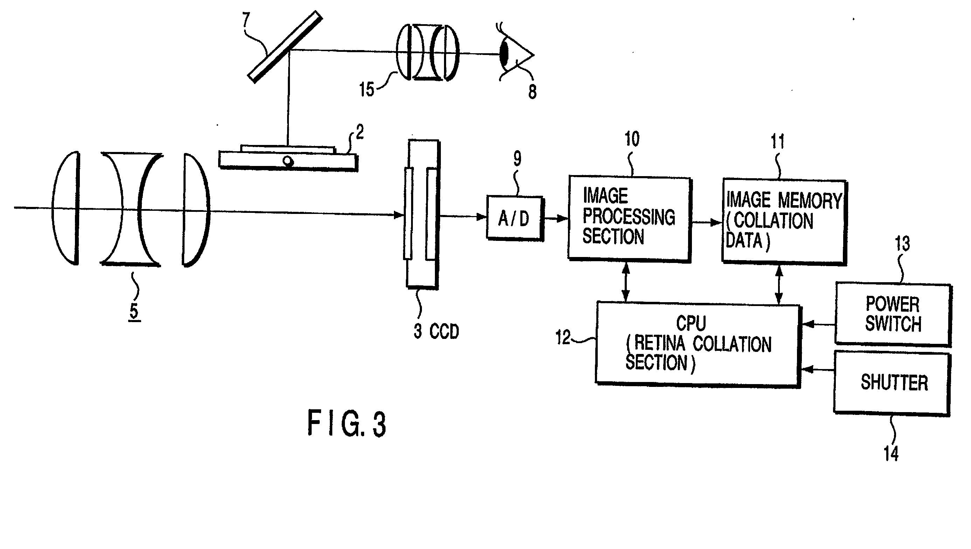

FIGS. 2 and 3 are views for explaining operation when photographing an image by a camera. While photographing, the direction of the mirror 2 is changed such that an object image which enters through the lens 5 is reflected toward the mirror 7. The object image reflected by the mirror 7 is sent to the finder optical system 15. In this manner, the user can observe an object image.

At this time, if the user pushes a shutter 14, the mirror 2 moves up as shown in FIG. 3 and light entering through the lens 5 then reaches the light receiving surface of the CCD 3, thereby photographing an image. The image converted into an electric signal by the CCD3 is further converted into a digital signal by the A/D converter section 9. Thereafter, the digital signal is subjected to image processing by the image processing section 10 under control by the CPU 12 and is then stored into the image memory 11.

As described above, the collation data used for the retina collation needs to be previously stored in the image memory 11, by user registration. In this case, the user registration is not carried out at the time of factory shipment but is carried out after a user purchased a camera. Although there may be various registration methods, an example thereof will be described below.
1. When a user keeps pushing on the power switch 13 for five seconds or more, a user registration mode is set. This may be indicated on a LCD or the like.
   At this time, the mirror 2 is positioned as shown in FIG. 2.
2. When a user pushes on the power switch 14 while looking into the finder optical system 15, the mirror is positioned as shown in FIG. 1. Then, retina data obtained by irradiating the eye point 8 of a user with light from the LED 4 enters through the finder optical system 15 and is reflected by the mirrors 7 and 2. The reflected light is thereafter let enter into the CCD 3. An image signal from the CCD 3 is converted into a digital signal by the A/D converter section 9. The digital signal is subjected to image processing by the image processing section 10 and is thereafter stored as collation data into a predetermined area in the image memory 11.
   Sometimes, the retina data may not be obtainable because of the reason that the user has closed his or her eyes. In this case, the data obtained from the eye point 8 is compared with reference data and if it is found that the data from the eye point 8 in not darker than the reference data, an error signal is output and the user registration is not performed.
3. If a plurality of users are registered, the same user registration as described above is carried out for each of other users.
4. When registration of all users is completed, user registration is finished by keeping pushing on the power switch 13 for five seconds or more.
5. If the operation of the above article 1 is carried out thereafter, the user registration mode is not set.

If the area of the registration memory is small, it may be arranged such that registration of a new user is inhibited when the number of users reaches a number limit by limiting the number of registerable users.

According to the first embodiment as described above, users who are allowed to use the camera can be specified for every camera and those users who have permitted IDs can use the camera. Therefore, the owners of images photographed by the camera can be grasped securely. In particular, since retina patterns of individual persons are distinguishable from each other and do not change so much depending on the time, identification of users can be achieved exactly. ID information is not limited to retina patterns as long as information inherent to an eyeball of a user is used. For example, it is needless to say that the same effects and advantages can be obtained by using iris patterns in place of retina patterns.

In addition, since the retina pattern of a user is photographed by an image pick-up section (or CCD in a digital camera) included in an ordinary camera, identification of users can be securely achieved by a cheap camera.

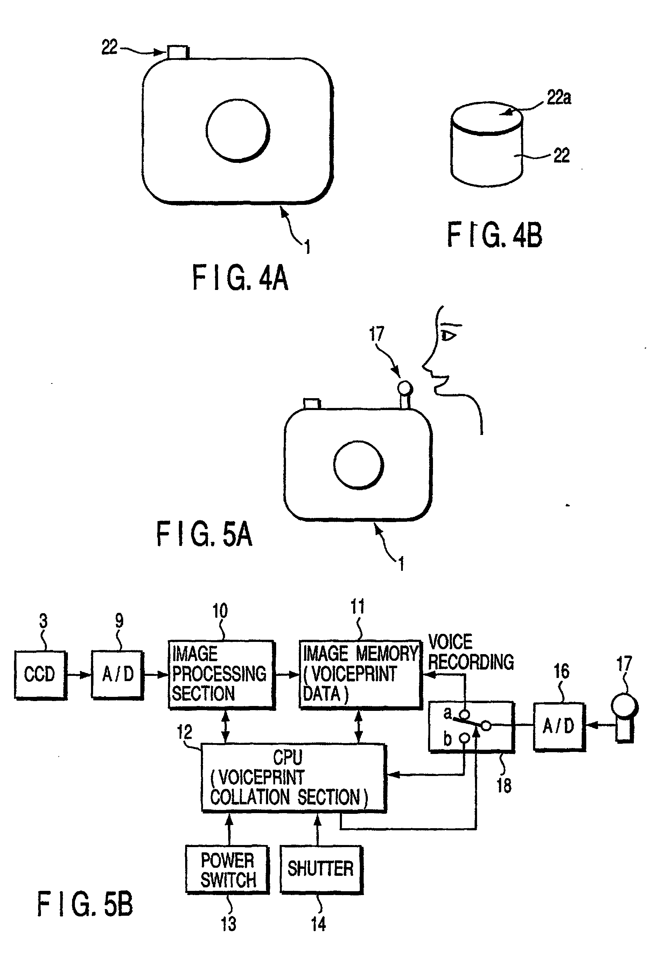

In the following, the second embodiment of the present invention will be explained. In the second embodiment, fingerprints of individual persons are used to permit only persons who are permitted to use a camera. FIGS. 4A and 4B are views for explaining the second embodiment of the present invention. As shown in FIG. 4A, the camera 1 is provided with a shutter 22 and comprises a fingerprint detecting section 22a capable of detecting fingerprints of forefingers of users, on the upper surface of the shutter 22, as shown in the enlarged view of the shutter shown in FIG. 4B. In this case, a fingerprint collation is performed by a CPU not shown which is provided inside the camera 1.

That is, fingerprint data of persons who are allowed to use the camera 1 is previously stored in the camera 1, and finger print detection is started when a user pushes the shutter 22. The fingerprint thus detected and fingerprint patterns previously stored are collated with each other in the camera. Only when the detected fingerprint corresponds to a stored fingerprint pattern, use of the camera is permitted.

Note that user registration is carried out in the same manner as described in the first embodiment. That is, after a camera is purchased, fingerprint data of each user is recorded (registered) in the form of digital data into a memory. When user registration of all users who should be registered is completed, completion of registration is notified to the camera so that user registration might not be newly carried out thereafter. If the memory for registration is small, the number of users may be limited and new registration may be inhibited at the time when the number of registered users reaches a number limit.

According to the second embodiment as described above, users who are allowed to use the camera can be specified for every camera and those users who have permitted IDs can use the camera. Therefore, the owners of images photographed by the camera can be grasped securely. In particular, since fingerprint patterns of individual persons are distinguishable from each other and do not change so much depending on the time, identification of users can be achieved exactly. Further, when photographing a picture, a user naturally puts a finger on a shutter button, so that a fingerprint pattern can be detected without particular consciousness about fingerprint collation.

In the following, explanation will be made of the third embodiment of the present invention. In the third embodiment, voiceprint of individual persons are used to permit only persons who are permitted to use a camera. FIGS. 5A and 5B are views for explaining the third embodiment of the present invention. As shown in FIG. 5A, the camera 1 is provided with a microphone 17 for detecting a voiceprint. FIG. 5B shows the structure of the camera according to the third embodiment.

Voiceprint collation according to the third embodiment will be explained below. At first, when user registration is carried out, a switch 18a is switched to the side a. Voiceprint data of the person who should be allowed to use the camera is inputted from the microphone 17 and is converted into a digital signal by an A/D converter 16. Thereafter, the digital signal is stored into a predetermined area in an image memory 11. In this case, the image memory 11 is the same one that is used for storing image data subjected to predetermined image processing after an object image is picked up by the CCD 3 and is converted into a digital signal.

Next, voiceprint collation will be explained. When voiceprint collation is carried out, the switch 18 is switched to the side b. When a user generates a voice toward the microphone 17, the voice is sent to the CPU 12 as a voiceprint collation section. The CPU 12 compares the voiceprint of the inputted voice with the voiceprint data previously stored in the image memory 11. Only when both are equal to each other, use of the camera is permitted.

If a voice of a user who has been registered is improperly recorded and is reproduced when collating the voiceprint, another person can use the camera. However, by combining the third embodiment with the first and second embodiments, the camera can prevent a person who has passed only voiceprint collation from being allowed to use the camera.

According to the third embodiment as described above, users who are allowed to use the camera can be specified for every camera and those users who have permitted IDs can use the camera. Therefore, the owners of images photographed by the camera can be grasped securely. In particular, since voiceprint patterns of individual persons are distinguishable from each other and do not change so much depending on the time, identification of users can be achieved exactly.

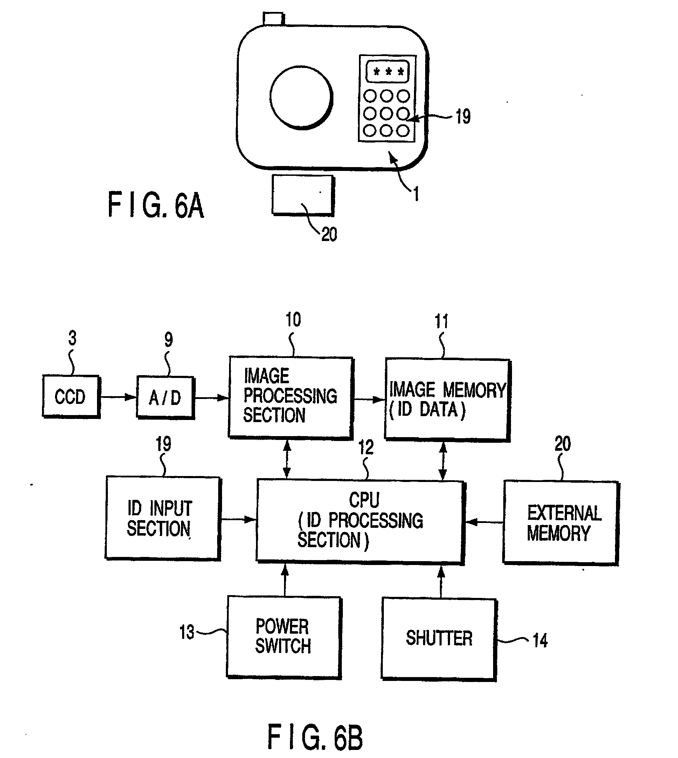

Next, explanation will be made of the fourth embodiment of the present invention. The fourth embodiment is arranged such that only those users who are allowed to use a camera can use the camera, by utilizing ID information inputted through an ID input section of the camera and stored into an image memory or an external memory. FIGS. 6A and 6B are views for explaining the fourth embodiment of the present invention. The camera according to the fourth embodiment is provided with an ID input section 19 for inputting ID information such as a code number or the like, as shown in FIG. 6A, and an external memory 20 such as a Smart Media or the like can be attached to the camera. FIG. 6B is a view showing the structure of the camera according to the fourth embodiment. The ID input section 19 for inputting ID information may be constructed by ten keys, a cross-shaped key, or a combination of operation switches of the camera (e.g., a shutter and the like), for example.

When ID information is input through the ID input section 19 for carrying out user registration, the ID information is stored as ID data into an image memory 11 under control by the CPU 12 as an ID collation section. The image memory 11 is the same one that is used for storing image data subjected to predetermined image processing after an object image is picked up by the CCD 3 and is converted into a digital signal.

Note that ID information inputted through the ID input section 19 may be stored into an external memory 20 attached to the camera 1, in addition to the image memory 11. As an area of the external memory 20 into which ID information is stored, a tag part or the like where users cannot freely read/write data may is used. In addition, the ID information once input cannot be changed or deleted.

When collating ID data, the CPU 12 compares ID information such as a code number or the like input from the ID input section 19 with ID information previously stored in a predetermined area in the image memory 11. Only when both correspond to each other, use of the camera is permitted.

Otherwise, ID information in the external memory 20 attached to the camera is automatically read and compared with ID data previously stored in the image memory 11. Only when the ID information corresponds to the ID data, use of the camera is permitted.

According to the forth embodiment as described above, users who are allowed to use the camera can be specified for every camera and those users who have permitted IDs can use the camera. Therefore, the owners of images photographed by the camera can be grasped securely. In particular, since collation of ID data is carried out simply by inputting ID information such as a code number or the like through the ID input section, identification of users can be carried out with ease. In addition, ID information can be stored into an external memory and collation of ID data can be carried out only by attaching the external memory to the camera. Therefore, time and labor for inputting ID information for every collation can be saved. Thus, identification of users can be achieved with ease.

Further, the two methods described above may be combined such that use of a camera is permitted only when ID information inputted from the ID input section 19 corresponds to ID information stored in the external memory 20 and also corresponds to ID information previously stored in the image memory 11. Then, reliability of user identification can be much more improved.

According to an embodiment described above, users who are allowed to use the camera can be specified for every camera and those users who have permitted IDs can use the camera. Therefore, the owners of images photographed by the camera can be grasped securely. In particular, since retina patterns of individual persons are distinguishable from each other and do not change so much depending on the time, identification of users can be achieved exactly.

According to another embodiment, retina patterns of users can be picked up by an image pick-up element included in an ordinary camera. Therefore, identification of users can be carried out securely in a cheap camera.

Also, according to another embodiment, fingerprint patterns of individual persons are particularly distinguishable from each other and do not change so much depending on the time. Therefore, identification of users can be achieved exactly.

In addition, according to another embodiment, identification of users can be carried out simply by only inputting ID information through an input section.

Further, according to another embodiment, time and labor for inputting ID information for every collation, identification of users can be easily carried out.

## Claims

1. A camera comprising:
an ID information storage section (11) for previously storing ID information of a user who is allowed to use the camera;
an ID information read section for reading ID information of a user at the time of use;
an ID information collation section (12) for comparing and collating the ID information read by the ID information read section with the ID information previously stored in the ID information storage section (11); and
a use limit section (12) for allowing use of the camera only when a collation result from the ID information collation section (12) indicates correspondence of the ID information, **characterised in that**
the ID information storage section (11) previously stores at least one retina pattern of a user who is allowed to use the camera, as ID information, and the ID information read section is an image pick-up element (3) which picks up a retina pattern of a user, as ID information to be compared and collated, and **in that**
the image pick-up element (3) is also used in common as an image pick-up element (3) for photographing an object, and the camera further comprises an optical axis switching section (2) for switching an optical axis between a case of photographing a retina pattern of a user and a case of photographing an object.

2. A camera according to claim 1, further **characterized in that** the ID information storage section (11) previously stores a fingerprint pattern of a user who is allowed to use the camera, as ID information, and the ID information read section is a fingerprint detecting section (22a) for reading a fingerprint pattern of a user who touches a shutter button surface, as ID information to be compared and collated and **in that** the ID information storage section (11) previously stores a voiceprint pattern of a user who is allowed to use the camera, as ID information, and the ID information read section is a microphone (17) for picking up a voice created by a user, as ID information to be compared and collated.

3. A camera according to claim 1, further **characterized in that** the ID information storage section (11) previously stores ID information of a user who is allowed to use the camera, and the ID information read section is an ID information input section (19) by which a user can input ID information, and addidionally the ID information read section is an external medium read section for reading ID information of a user stored in an external storage medium (20) which can be attached to and detached from the camera.

## Patentansprüche

1. Kamera, mit:
einem ID Informationsspeicherabschnitt (11), um im voraus ID Informationen
eines Anwenders zu speichern, der die Berechtigung hat, die Kamera zu verwenden;
einem ID Informationsleseabschnitt zum Lesen der ID Informationen eines Anwenders zum Zeitpunkt der Verwendung;
einem ID Informationssammelabschnitt (12) zum Vergleichen und Sammeln der ID Informationen, die durch den ID Informationsleseabschnitt gelesen wurden, mit den ID Informationen, die an früherer Stelle in dem ID Informationsspeicherabschnitt (11) gespeichert wurden; und
einem Verwendungbeschränkungs-Abschnitt (12), um es dem Anwender zu ermöglichen die Kamera nur dann zu verwenden, wenn ein Sammelergebnis aus dem ID Informationssammelabschnitt (12) eine Entsprechung der ID Informationen anzeigt, **dadurch gekennzeichnet, dass**
der ID Informationsspeicherabschnitt (11) im voraus wenigstens ein Retina-Muster eines Anwenders speichert, der die Erlaubnis hat die Kamera zu verwenden, und zwar als ID Informationen, und der ID Informationsleseabschnitt aus einem Bild-Aufnahmeelement (3) besteht, welches ein Retina-Muster eines Anwenders aufnimmt und zwar als ID Informationen, die verglichen und gesammelt werden sollen, und dadurch, dass
das Bildaufnahmeelement (3) auch gemeinsam als ein Bildaufnahmeelement (3) zum fotografieren eines Objektes verwendet wird, und die Kamera ferner einen optischen Achsen-Schaltabschnitt (2) aufweist, um eine optische Achse zwischen einem Fall gemäß einem Fotografieren eines Retina-Muster eines Anwenders und einem Fall gemäß einem Fotografieren eines Objektes umzuschalten.

2. Kamera nach Anspruch 1, ferner **dadurch gekennzeichnet, dass** der ID Informationsspeicherabschnitt (11) ein Fingerabdruckmuster eines Anwenders im voraus oder früher speichert, der die Erlaubnis hat die Kamera zu verwenden, und zwar als ID Informationen, und der ID Informationsleseabschnitt aus einem Fingerabdruck-Detektorabschnitt (22a) besteht, um ein Fingerabdruck- Muster eines Anwenders zu lesen, der eine Blendentastenfläche berührt, und zwar als ID Informationen, die zu vergleichen und zu sammeln sind, und dass der ID Informationsspeicherabschnitt (11) im voraus ein Sprachdruckmuster eines Anwenders speichert, der die Erlaubnis hat die Kamera zu verwenden, und zwar als ID Informationen, und der ID Informationsleseabschnitt aus einem Mikrofon (17) besteht, um eine Sprache aufzunehmen, die durch einen Anwender erzeugt wird, und zwar als ID Informationen, die zu vergleichen und zu sammeln sind.

3. Kamera nach Anspruch 1, ferner **dadurch gekennzeichnet, dass** der ID Informationsspeicherabschnitt (11) ID Informationen eines Anwenders im voraus speichert, der die Erlaubnis hat die Kamera zu verwenden, und dass der ID Informationsleseabschnitt aus einem ID Informationseingabeabschnitt (19) besteht, durch den ein Anwender ID Informationen eingeben kann, und zusätzlich der ID Informationsleseabschnitt aus einem externen Medium-Leseabschnitt zum Lesen von ID Informationen eines Anwenders besteht, die in einem externen Speichermedium (20) gespeichert sind, welches an der Kamera angebracht und von dieser abgenommen werden kann.

## Revendications

1. Appareil de prise de vues comprenant :
une section de stockage d'informations d'identification (11) pour stocker préalablement des informations d'identification d'un utilisateur qui est autorisé à utiliser l'appareil de prise de vues;
une section de lectures d'informations d'identification pour lire des informations d'identification d'un utilisateur lors de l'utilisation ;
une section de collecte d'informations d'identification (12) pour comparer et collecter les informations d'identification lues par la section de lecture d'informations d'identification avec les informations d'identification précédemment stockées dans la section de stockage d'informations d'identification (11) ; et
une section de limite d'utilisation (12) pour autoriser l'utilisation de l'appareil de prise de vues uniquement lorsqu'un résultat de collecte depuis la section de collecte d'informations d'identification (12) indique la correspondance des informations d'identification, **caractérisé en ce que**
la section de stockage d'informations d'identification (11) stocke préalablement au moins un motif de rétine d'un utilisateur qui est autorisé à utiliser l'appareil de prise de vues, en tant qu'informations d'identification et la section de lecture d'informations d'identification est un élément de capture d'image (3) qui capture le motif de rétine d'un utilisateur, en tant qu'informations d'identification à comparer et collecter, et **en ce que**
l'élément de capture d'image (3) est également utilisé en commun en tant qu'élément de capture d'image (3) pour photographier un objet et l'appareil de prise de vues comprend, de plus, une section de commutation d'axe optique (2) pour faire basculer un axe optique entre un cas de photographie d'un motif de rétine de l'utilisateur et un cas de photographie d'un objet.

2. Appareil de prise de vues selon la revendication 1, **caractérisé en ce que** la section de stockage d'informations d'identification (11) stocke préalablement un motif d'empreinte digitale d'un utilisateur qui est autorisé à utiliser l'appareil de prise de vues, en tant qu'informations d'identification, et la section de lecture d'informations d'identification est une section de détection d'empreinte digitale (22a) pour lire un motif d'empreinte digitale d'un utilisateur qui touche la surface du bouton d'un obturateur, en tant qu'informations d'identification à comparer et collecter et **en ce que** la section de stockage d'informations d'identification (11) stocke préalablement un motif d'empreinte vocale d'un utilisateur qui est autorisé à utiliser l'appareil de prise de vues, en tant qu'informations d'identification, et la section de lecture d'informations d'identification est un microphone (17) pour capturer une voix générée par un utilisateur, en tant qu'informations d'identification à comparer et collecter.

3. Appareil de prise de vues selon la revendication 1, **caractérisé en ce que** la section de stockage d'informations d'identification (11) stocke préalablement des informations d'identification d'un utilisateur qui est autorisé à utiliser l'appareil de prise de vues, et la section de lecture d'informations d'identification est une section d'entrée d'informations d'identification (19) grâce à laquelle un utilisateur peut entrer des informations d'identification, et, de plus, la section de lecture d'informations d'identification est une section de lecture de support externe pour lire les informations d'identification d'un utilisateur stockées sur un support de stockage externe (20) qui peut être attaché à et détaché de l'appareil de prise de vues.
